# EUROPEAN PATENT APPLICATION

(11) **EP 2 688 294 A1**
(43) Date of publication of application: **22.01.2014**
(21) Application number: 13176868.1
(22) Date of filing: 17.07.2013
(51) Int. Cl.: H04N 5/76, H04L 12/28, H04N 1/00

(54) **Recording and reproduction device**

(30) Priority: 18.07.2012 JP 2012159185
(71) Applicant: Funai Electric Co., Ltd., Daito-shi, Osaka 574-0013 (JP)
(72) Inventor: Takahashi, Hironobu, Daito-shi, Osaka 574-0013 (JP)
(74) Representative: Grünecker, Kinkeldey, Stockmair & Schwanhäusser

(57) **Abstract**

A recording and reproduction device is capable of recording and outputting content including video images and/or audio and includes a history acquisition unit that acquires usage histories by counting, for a specified period of time, data on whether or not a plurality of functions being performed in the background are in a specific usage state, and a display controller that displays, on a specified display unit, a user interface screen that is compiled based on the usage histories and that shows, by time slot, frequencies at which at least the plurality of functions are in the specific usage state.

## Description

### BACKGROUND OF THE INVENTION

### 1. Field of the Invention

The present invention relates to a recording and reproduction device.

### 2. Description of the Related Art

In recording and reproduction devices typified by recorders equipped with a hard disk drive (HDD) and televisions provided with video recording functions, there has recently been an advance toward multifunctionalization and increased functionality. Such a recording and reproduction device also has functions to be performed separately (performed in the background) in parallel to processes to be currently performed by a user via a remote controller or the like, and as a result, convenience for users has increased. Meanwhile, in a recording and reproduction device, power-saving effects such as suppressing or reducing an increase in power consumption have also been strongly required, along with improving convenience of the user.

Here, as technology related to power-saving settings, electronic devices have been known in which a plurality of power-saving modes created by combining and grouping a plurality of power-saving items in televisions, DVDs, and LCDs are stored in a memory, and a microcomputer is used to perform ON/OFF control of one of the plurality of power-saving modes, thereby achieving ON/OFF control of the plurality of power-saving items included in the power-saving mode all at once (see Japanese Patent Application Laid-Open Publication No. 2006-254185). Furthermore, a configuration of a video display device has been known in which the amount of power consumption in the current operation setting of the video display device is acquired, and after recommended operation settings which reduce the power consumption more than the current power consumption are displayed out of a plurality of recommended operation settings registered as preselected choices, one of these recommended operation settings is selected in response to a specified operational input, and the operation setting of the video display device is performed in accordance with the recommended operation setting thus selected (see, for example, Japanese Patent Application Laid-Open Publication No. 2011-59389).

### SUMMARY OF THE INVENTION

As was described above, in recording and reproduction devices, many functions are performed in the background, but not all of these functions are necessary utilized in an effective manner for a user at all times. Therefore, in order to achieve convenience of the user and power-saving effects with an appropriate balance, it was necessary to appropriately provide the user with information about whether or not each of the functions performed in the background was actually utilized effectively. Moreover, it was also necessary to provide the user who performs power-saving settings on a device with an environment that allows the settings to be performed more easily.

Accordingly, various preferred embodiments of the present invention were devised to solve at least one of the problems described above and provide a recording and reproduction device which accurately provides users with information necessary to achieve convenience and power-saving effects with a desired balance and which also contributes to realization of user convenience and power-saving effects by making user settings easier.

A preferred embodiment of the present invention provides a recording and reproduction device capable of recording and outputting content including video images and/or audio, wherein the recording and reproduction device includes a history acquisition unit that acquires usage histories by counting, for a specified period of time, data on whether or not a plurality of functions performed in the background are in a specific usage state, and a display controller arranged and programmed to display, on a specified display unit, a user interface (UI) screen that is compiled based on the usage histories and that shows, by time slot, frequencies at which at least the plurality of functions are in the specific usage state.

With this configuration, a UI screen shows, by time slot, frequencies at which at least the plurality of functions performed in the background are in a specific usage state. Therefore, the user can easily understand whether each of the plurality of functions performed in the background is actually being utilized in an effective manner by looking at the UI screen, and as a result, it becomes possible to easily perform the setting to achieve user convenience and power-saving effects with an appropriate balance.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram showing a schematic configuration of a recording and reproduction device.

FIG. 2 is a flowchart showing the UI display process.

FIG. 3 is a diagram showing one example of a UI screen.

FIG. 4 is a diagram showing another example of a UI screen.

FIG. 5 is a flowchart showing the operation setting process.

FIG. 6 is a diagram showing another example of a UI screen.

### DETAILED DESCRIPTION OF THE PREFERRED EMBODIMENTS

According to a preferred embodiment of the present invention, a display controller is preferably programmed to generate a plurality of operation modes in which at least one of a plurality of functions is set to an enabled state in a time slot during which a frequency is at a specified reference/level or higher, with the reference being different for each operation mode, and to display the UI screen after including selection boxes which make the selection of one the plurality of operation modes possible.

According to a preferred embodiment of the present invention, the recording and reproduction device may include a plurality of integrated circuits each of which is used to control some of the plurality of functions, and the display controller is preferably programmed to generate the operating modes in which the correlation between the enabled state and the time slot is differentiated for each of the functions corresponding to a different integrated circuit.

According to a preferred embodiment of the present invention, the display controller may be programmed to provide, in the UI screen, numerical values indicating the power-saving effect in the case of selecting each of the operation modes and display the UI screen.

According to a preferred embodiment of the present invention, the plurality of functions preferably include at least one function from among a specific recording function with which content pertaining to a plurality of television broadcast channels is continuously recorded, a startup time reduction function with which the time that the recording and reproduction device takes to transition from the standby state to the operating state is shortened compared to the standard transition time, and a network function with which communication with an external communication device is performed via a specified network.

According to a preferred embodiment of the present invention, if the specific recording function is included in the plurality of functions, the history acquisition unit preferably determines that the specific recording function is in the specific usage state in a time slot during which the content to be reproduced following recording is recorded.

According to a preferred embodiment of the present invention, if the startup time reduction function is included in the plurality of functions, the history acquisition unit preferably determines that the startup time reduction function is in the specific usage state in a time slot during which the startup time reduction function is set to an enabled state and also the content is output.

According to a preferred embodiment of the present invention, if the network function is included in the plurality of functions, the history acquisition unit preferably determines that the network function is in the specific usage state in a time slot during which data pertaining to the content to be viewed is received from the external communication device via the network and also the content based on this received data is output.

In addition, the present invention is not limited only to a recording and reproduction device but is also applicable to methods having processes realized by a recording and reproduction device and applicable to computer readable programs which cause a computer to carry out these processes.

Specific preferred embodiments of the present invention will be further described below with reference to the drawings.

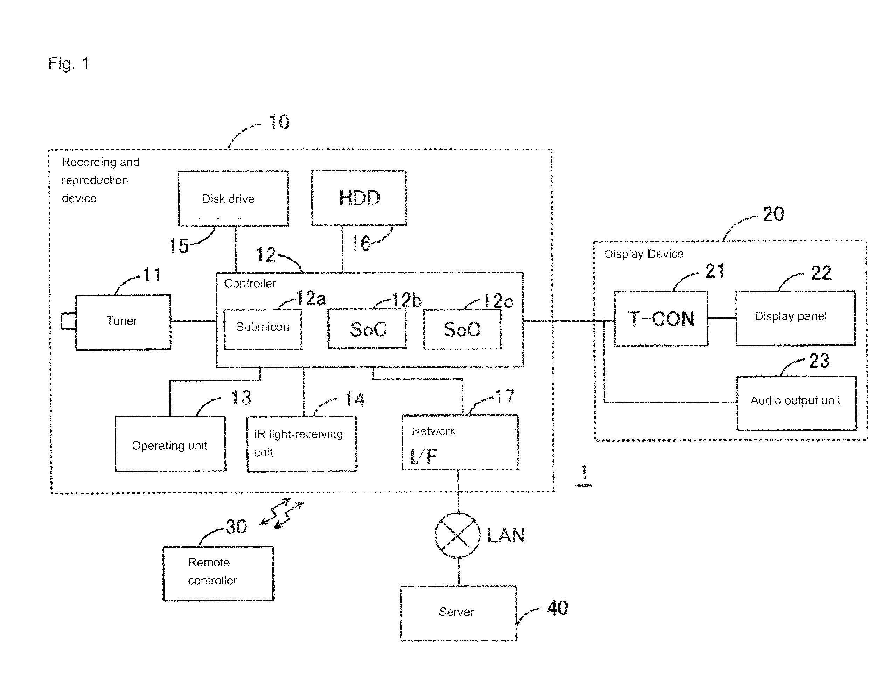

FIG. 1 is a block diagram schematically showing the device configuration according to the present preferred embodiment. A recording and reproduction device 10 preferably includes a tuner 11, a controller 12, an operating unit 13, an infrared light (IR) receiving unit 14, a disk drive 15, an HDD 16, a network interface (I/F) 17, and the like. Examples of devices that are applicable as the recording and reproduction device 10 include recorders, players, or the like capable of recording content including video images and/or audio to an HDD and digital medium such as a DVD (digital versatile disk) and BD (Blu-ray disc) and reproducing the content recorded on this HDD or digital medium, and so forth.

A display device 20 connected to the recording and reproduction device 10 so as to allow communication is a television, for example, preferably including a timing controller (T-CON) 21, a display panel 22, an audio output unit 23 (such as a speaker), and the like. A liquid crystal panel, plasma display panel, organic EL display, and the like are applicable as non-limiting examples of the display panel 22. Alternatively, it is also possible to conceive of a device including both the internal configuration of the recording and reproduction device 10 and the internal configuration of the display device 20 as a single product (television 1) and to conceive of such a television 1 as the recording and reproduction device according to various preferred embodiments of the present invention.

A CPU and various types of memory (such as ROM and RAM) are installed in the controller 12, and the CPU controls the recording and reproduction device 10 in accordance with a specified program. To be more specific, the controller 12 includes, for example, a sub-microcomputer (submicon) 12a, a plurality of system-on-chips (SoCs) 12b and 12c, and the like. The submicon 12a, the SoC 12b, and the SoC 12c are each an integrated circuit in which a CPU programmed to control the recording and reproduction device 10, various types of memory, and the like are provided into a single chip and therefore can also be said to be each an independent control unit. Under the control of the controller 12, the tuner 11 receives broadcast signals and outputs intermediate frequency signals (IFs) to the controller 12. The controller 12 decodes video signals and audio signals based on the IFs, executes specified corrections and image quality adjustment on video signals, and outputs the video signals and audio signals to the display device 20.

The disk drive 15 is capable of reading information from and writing information to an inserted digital medium. The HDD 16 corresponds a type of storage device and is capable of storing programs (a type of content) included in broadcast signals received via the tuner 11 and various types of content such as moving pictures downloaded via a specified network line (e.g., LAN). The controller 12 is also capable of outputting to the display device 20 video signals and audio signals pertaining to the content read out from a digital medium by the disk drive 15 and the content read out from the HDD 16.

In the display device 20, the T-CON 21 temporarily stores an input video signal on a frame memory (not illustrated) while also outputting a drive signal corresponding to this stored signal to a display panel 22 at a specified timing, so as to drive the display panel 22 including an array of pixels and displaying video images based on the video signal on the display panel 22. In the display device 20, furthermore, an audio output unit 23 outputs an input audio signal from a speaker after appropriate amplification by an amplifier.

The operating unit 13 preferably includes buttons, switches, a touch panel, and the like and accepts commands input by a user. The IR light-receiving unit 14 receives an IR signal transmitted from a remote controller 30 operated by the user. Regardless of whether the recording and reproduction device 10 is in a standby state or operation state, the submicon 12a is in an operation state upon supply of power, monitors the user's input via the operating unit 13 or the IR light-receiving unit 14, and performs control in accordance with a command input by the user. Note that the recording and reproduction device 10 may also be connected to an external disk drive or HDD via a USE (universal serial bus) or other such communication standard in addition to having the disk drive and HDD built in a casing. Moreover, besides the configuration shown in FIG. 1, the recording and reproduction device 10 can also be equipped with an external input terminal to accept input of video images and audio from the outside, a power supply circuit, and various other publicly known configurations.

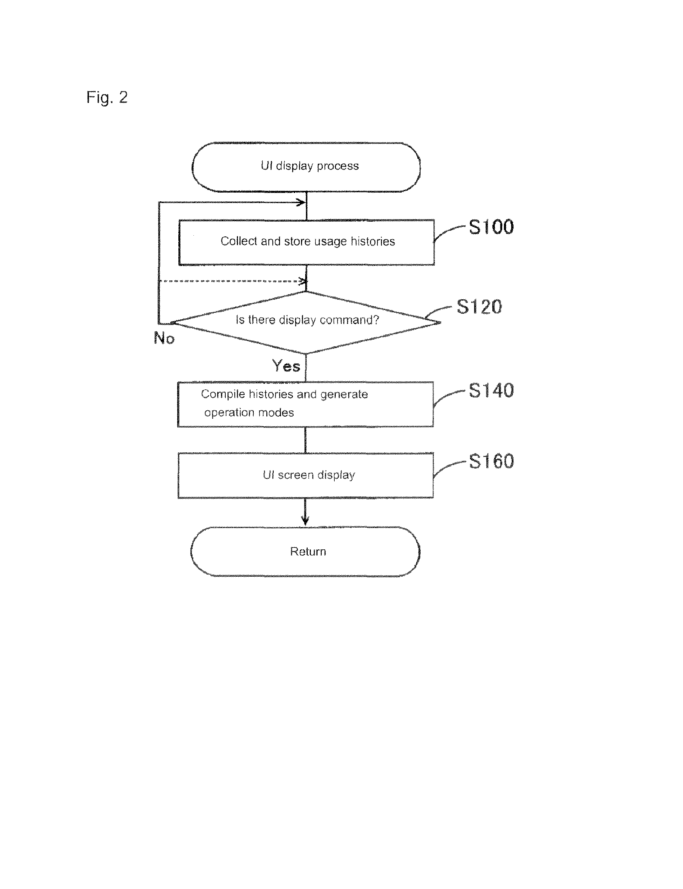

FIG. 2 is a flowchart that illustrates the UI display process that the recording and reproduction device 10 can carry out in the present preferred embodiment. The UI display process is realized by the controller 12 performing control in accordance with a specified program. First, in Step S100, the controller 12 acquires usage histories obtained by counting, for a specified period of time, data on whether or not a plurality of functions performed in the background in the recording and reproduction device 10 are in a specific usage state (history acquisition unit). The plurality of functions performed in the background (hereinafter also referred to simply as "plurality of functions") include at least one function from among a total recording function (specific recording function), an instantaneous startup function (startup time reduction function), and a network function, for example. In addition, the specific usage state is a state in which a given function is utilized effectively for the user (a state of being truly contributing to the convenience of the user). Furthermore, the specified period of time refers to a period of approximately one month, for example. The controller 12 may store the newest usage histories by repeatedly counting usage histories corresponding to a specified period of time either regularly or irregularly or may store usage histories corresponding to the most recent specified period of time while constantly counting the usage histories. Moreover, the usage histories of each function constitute information sorted in time slot units (e.g., one hour) into time slots applicable to the specific usage state and inapplicable time slots.

The total recording function is also called a total channel recording function and refers to a function in which all programs of television broadcast channels that can be received by the installed recording and reproduction device 10 are continuously recorded on the HDD 16 while the programs are broadcasted. Accordingly, when the total recording function is set to an enabled state by the user's operation, all programs of all the channels that can be received by the recording and reproduction device 10 are theoretically recorded. However, power consumption is increased by setting the total recording function to an enabled state. Note that the number of channels that the recording and reproduction device 10 can record simultaneously depends on the number of tuners installed in the device. Therefore, the total recording function (specific recording function) referred to in the present preferred embodiment is not limited to a mode that records all programs of the television broadcast channels that can be received by the recording and reproduction device 10 and also includes a mode that continuously records content pertaining to a plurality of television broadcast channels.

When the usage histories for the total recording function are counted, the controller 12 monitors whether or not this function is set to an enabled state and whether or not there is a program to be reproduced following the recording by using the total recording function. Then, if there is a program to be reproduced (output to the display device 20) following the recording by the total recording function, the controller 12 determines that the total recording function was in the specific usage state for the time slot during which this program was recorded. That is, not a time slot during which the total recording function is simply operated, but a time slot during which the program to be viewed as a result is recorded is determined as the time during which the total recording function is utilized in an effective manner for the user, and this time slot is reflected in the usage history for the total recording function.

The instantaneous startup function refers to a function of making the time that the recording and reproduction device 10 takes to transition from the standby state to the operating state shorter than the standard transition time (e.g., X seconds). Accordingly, if the instantaneous startup function is set to an enabled state by the user's operation, when the user operates the remote controller 30 or the like to send to the recording and reproduction device 10 that is in the standby state a command to turn the power on, the recording and reproduction device 10 starts up and completes the transition to the operation state in Y seconds which is shorter than the above-described X seconds. However, in the standby state with the instantaneous startup function being enabled, unlike the general standby state in which the minimum functions of the submicon 12a, the operating unit 13, the IR light-receiving unit 14, and the like to accept a command from the user are started up, power is also supplied to the many principal components within the recording and reproduction device 10 (such as the tuner 11 and HDD 16) for startup, with the output of video images and audio being halted. Accordingly, power consumption is increased by setting the instantaneous startup function to an enabled state.

When the usage histories for the instantaneous startup function are counted, the controller 12 determines that the instantaneous startup function is in the specific usage state for a time slot during which this function is set to an enabled state and also some sort of content is output to the display device 20 from the recording and reproduction device 10. That is, the time slot during which the user places the recording and reproduction device 10 in an operating state to view some sort of content, and not the time when the instantaneous startup function is simply enabled, is determined as the time when the instantaneous startup function is utilized in an effective manner for the user, and this time slot is reflected in the usage history for the instantaneous startup function.

The network function refers to a function of performing communication with an external communication device via a specified network. In the present preferred embodiment, the recording and reproduction device 10 can communicate with the server 40 connected via the network I/F 17 and LAN by the network function. The recording and reproduction device 10 and the server 40 preferably are devices that are compatible with standards based on DLAN (Digital Living Alliance Network), for example, and the recording and reproduction device 10 can receive and reproduce moving picture files, music files, and other such content saved on the server 40. However, when the network function is set to an enabled state, various types of data are sent and received between the recording and reproduction device 10 and the server 40 either regularly or irregularly according to a command by the user or automatically, so power consumption is increased.

When the usage histories for the network function are counted, the controller 12 receives data pertaining to the content selected to be viewed by the user's operation from the server 40 via the LAN and network I/F 17, and for a time slot during which the content based on this received data is output to the display device 20, the network function is determined to be in the specific usage state. The data pertaining to the content referred to herein preferably is a transport stream (TS) in which packets to transfer video images and audio configuring the content continue. However, the controller 12 determines that the network function is not in the specific usage state for a time period during which data pertaining to advertisements, surveys, and the like, for example, is received even during a time period during which the TS is received from the server 40. The content of the packets currently delivered can be distinguished by the header, identifier attached to the packets, and the like. That is, not a time slot during which information is simply downloaded from the server 40 by the network function, but a time slot during which important information excluding advertisements, surveys, and other such unimportant information for the user is downloaded and viewed is determined as the network function being utilized in an effective manner for the user, and this time slot is reflected in the usage history for the network function.

Note that the controller 12 may count the histories of whether or not the main power of the television (display device 20) connected to the recording and reproduction device 10 is switched on, in parallel with performing the process of acquiring the usage histories for the plurality of functions. Information on whether or not the main power of the display device 20 is switched on can be acquired from the display device 20 via a communication pathway based on HDMI (high-definition multimedia interface) standards, for example. The histories of the ON state of the main power of the display device 20 acquired in this manner may be used for the determination of whether or not each of the plurality of functions was effectively utilized. The controller 12 stores the respective histories for the specified period of time counted in this manner on a specified memory.

Next, when the controller 12 detects that a UI screen display command is input from the user via the operating unit 13 or IR light-receiving unit 14 ("Yes" in Step S120), the process proceeds to Step S140. On the other hand, when a UI screen display command is not input ("No" in Step S120), this work is continued if the usage histories are being counted, and if the work of counting the usage histories has been completed, then the controller 12 waits for a next command from the user.

In Step S140, the controller 12 compiles the newest usage histories corresponding to the specified period of time saved at that point, so as to generate a table showing the frequencies of the specific usage state (usage frequency table) for each time slot for at least the plurality of functions. Furthermore, the controller 12 generates a plurality of operation modes (recommended modes) to set at least one of the plurality of functions to an enabled state in a time slot during which this frequency is at a specified reference or higher, with this reference being different for each operation mode.

First, a method for generating the usage frequency table will be described. The controller 12 sorts the saved usage histories into ones for non-workdays (Saturdays, Sundays, and holidays) and ones for days (weekdays) excluding non-workdays according to a calendar acquired ahead of time. Then, the frequency (usage frequency) at which each of the plurality of functions is in the specific usage state is calculated for each time slot (for every hour) from 0 a.m. to 11 p.m. on weekdays based on the usage histories for weekdays. For instance, in cases where there are 20 weekdays within the specified period of time, if the total recording function is indicated to be in the specific usage state for 10 days out of the 20 days of the histories during an hour period starting at 0 a.m., then the usage frequency of the total recording function during this hour period starting at 0 a.m. on weekdays is 50%. Similarly, the frequency (usage frequency) at which each of the plurality of functions is in the specific usage state is calculated for each time slot from 0 a.m. to 11 p.m. on non-workdays based on the usage histories for non-workdays. Moreover, the frequency (usage frequency) at which the main power of the display device 20 is in an ON state is calculated for each time slot from 0 a.m. to 11 p.m. for weekdays and non-workdays based on the histories of the main power of the display device 20 being switched on.

The controller 12 generates as image data a usage frequency table showing the usage frequencies thus calculated by time slot and by functions. In the usage frequency table, the frequencies may be expressed by concrete numerical values or may also be indicated by color coding or the like on a plurality of levels, rather than by numerical values. The levels of frequencies are expressed by color coding, for example, frequencies at 80% or higher being the first color, frequencies at 50% or higher and lower than 80% being the second color, frequencies lower than 50% being the third color, and so forth.

Next, a method for generating recommended modes will be described. As one example, the controller 12 identifies the highest usage frequency among the respective usage frequencies of the plurality of functions as the representative frequency for each time slot and compares each of the representative frequencies with a first threshold value and a second threshold value (where first threshold value < second threshold value) which correspond to the specified references described above. Then, the controller 12 establishes a recommended mode 1 in which the plurality of functions are set to an enabled state only in time slots during which the corresponding representative frequencies are at the first threshold value or higher and establishes a recommended mode 2 in which the plurality of functions are set to an enabled state only in time slots during which the corresponding representative frequencies are at the second threshold value or higher. With this method, the time during which the plurality of functions are set to an enabled state tends to be shorter in the recommended mode 2 than in the recommended mode 1, so it can be said that the recommended mode 2 is a mode with a higher power-saving effect than the recommended mode 1. Of course, the number of the recommended modes is not limited to two, and it is possible to establish more recommended modes by providing more threshold values.

The definition of the representative frequency may be other than the one described above. For instance, the controller 12 may also take the value obtained by adding up the values of the respective usage frequencies for the plurality of functions to which specified weighting is applied (which are multiplied by coefficients) in each time slot as the representative frequency in this time slot. Alternatively, the controller 12 may take, as the representative frequency, the usage frequency of the function with the highest power consumption for the standards (e.g., total recording function) among the respective usage frequencies of the above-described plurality of functions. The controller 12 generates as image data a recommended mode selection section which shows choices for the recommended modes thus established.

In Step S160, the controller 12 outputs a UI screen based on the generated image data and displays it on the display panel 22 (display controller).

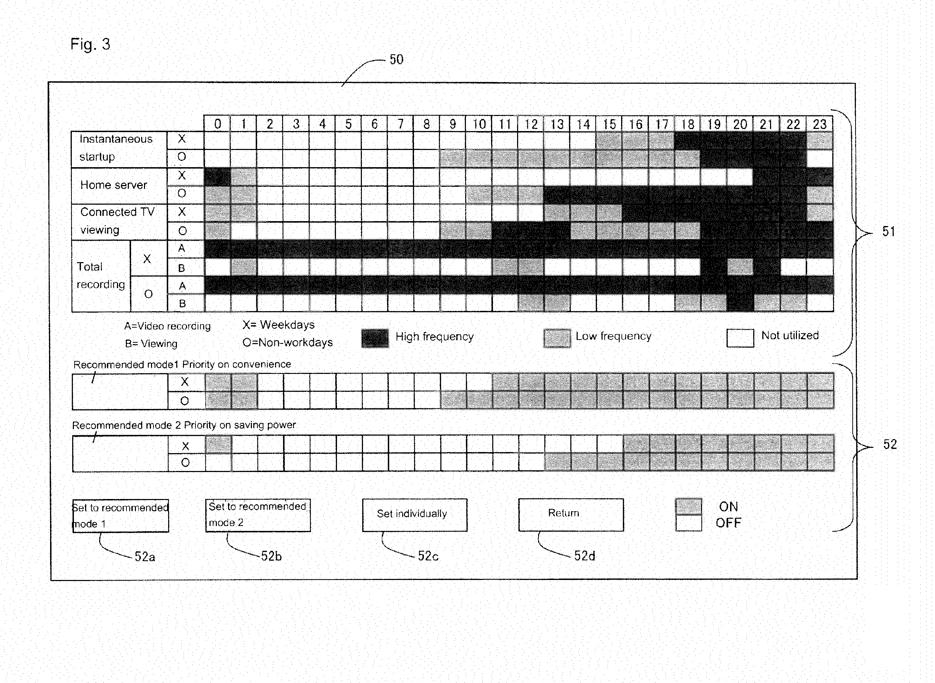

FIG. 3 constitutes one example of a UI screen 50 displayed in Step S160. Roughly speaking, the UI screen 50 preferably includes a usage frequency table 51 and a recommended mode selection section 52. For example, the usage frequency table 51 shows the time slots (0 to 23) in the direction of horizontal axis, shows the descriptions corresponding to the plurality of functions ("Instantaneous startup" corresponding to the instantaneous startup function, "Home server" corresponding to the network function, and "Total recording" corresponding to the total recording function) in the direction of vertical axis, and also shows the usage frequencies for each time slot by color after dividing each function into weekdays and non-workdays. In this figure, the darkest gray color is used to indicate time slots with relatively highest usage frequencies (such as time slots during which the usage frequencies are 80% or higher), a light gray color is used to indicate time slots with usage frequencies lower than those (such as time slots during which the usage frequencies are 50% or higher and lower than 80%), and a white color is used to indicate time slots with relatively lowest usage frequencies (such as time slots during which the usage frequencies are lower than 50%).

Note that with regard to the total recording function, the frequencies are displayed after being further divided into "Video recording" and "Viewing." Specifically, for "Video recording," the highest frequency state is always shown, while for "Viewing," with respect to time slots corresponding to hours during which recorded programs are broadcasted, color coding is done to reflect the frequencies at which the programs are actually viewed following video recording. In addition, the usage frequency table 51 is provided with a section for "Connected TV viewing," and frequencies (usage frequencies) at which the main power of the display device 20 is in an ON state are shown in this section.

The recommended mode selection section 52 shows by color in table format the content of setting for each time slot in each of the established recommended modes, and a plurality of selection boxes 52a, 52b, 52c, and 52d are also shown. Specifically, as is shown in FIG. 3, whether the plurality of functions are set to an enabled state (ON: gray color) or a disabled state (OFF: white color) is indicated in each time slot, separately for weekdays and non-workdays in each of the recommended modes 1 and 2. Furthermore, in the plurality of selection boxes 52a, 52b, 52c, and 52d, any one can be selected from among the recommended mode 1, recommended mode 2, individual setting, and return.

Here, the method for generating the recommended modes in Step S140 is not limited to the mode described above. In the recommended modes described above, a method is adopted in which whether or not the plurality of functions performed in the background such as the instantaneous startup function, network function, and total recording function are set to an enabled state all at once in each time slot. However, such a plurality of functions may also be set individually to ON or OFF in each time slot. For instance, the controller 12 compares each of the usage frequencies of the plurality of functions with the threshold values. Then, in the recommended mode 1, in a time slot during which the usage frequency of each of the plurality of functions is at the first threshold value or higher, the function may be set to ON, while in the recommended mode 2, in a time slot during which the usage frequency of each of the above-described plurality of functions is at the second threshold value or higher, the function may be set to ON.

Alternatively, the plurality of functions are divided into groups of SoCs constituting the main control bodies of these functions, and the determination with the threshold values may be performed based on the usage histories in these group units. For example, in the present preferred embodiment, the SoC 12b is responsible to control the instantaneous startup function and the network function among the plurality of functions, while the SoC 12c is responsible to control the total recording function among the plurality of functions. Therefore, the controller 12 identifies the representative frequency from the usage frequencies of the functions corresponding to the SoC 12b (the instantaneous startup function and the network function) as described above and compares the representative frequency with the first and second threshold values. Similarly, the controller 12 identifies the representative frequency from the usage frequency of the function corresponding to the SoC 12c (the total recording function) (in this case, the usage frequency of the total recording function is the representative frequency) and compares the representative frequency with the first and second threshold values. As a result, the controller 12 establishes the recommended mode 1 which is such that the functions corresponding to the SoC 12b are set to ON in a time slot during which the representative frequency of the functions corresponding to the SoC 12b is at the first threshold value or higher and such that the function corresponding to the SoC 12c is set to ON in a time slot during which the representative frequency of the function corresponding to the SoC 12c is at the first threshold value or higher. Similarly, the controller 12 establishes the recommended mode 2 which is such that the functions corresponding to the SoC 12b are set to ON in a time slot during which the representative frequency of the functions corresponding to the SoC 12b is at the second threshold value or higher and such that the function corresponding to the SoC 12c is set to ON in a time slot during which the representative frequency of the function corresponding to the SoC 12c is at the second threshold value or higher.

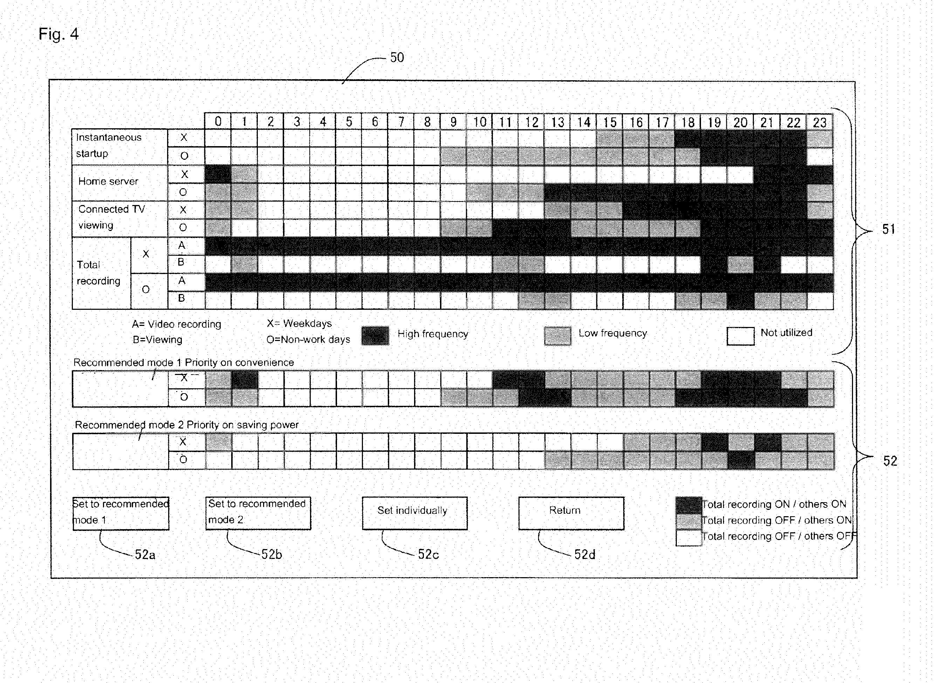

FIG. 4 constitutes one example of the UI screen 50 displayed in Step S160 and shows an example different from that of FIG. 3. FIG. 4 constitutes an example of the case of generating recommended modes in which the correlation between the enabled state and the time slot is differentiated for each of the functions with the corresponding SoC being different as described above. In FIG. 4, the patterns of the recommended mode selection section 52 are different from those of FIG. 3. Specifically, in FIG. 4, color coding with at least three colors is done in each of the recommended modes 1 and 2, and for example, the darkest gray color is used to indicate time slots during which the functions corresponding to the SoC 12b (the instantaneous startup function and the network function) and the function corresponding to the SoC 12c (the total recording function) are all set to ON, a light gray color is used to indicate time slots during which the functions corresponding to the SoC 12b (the instantaneous startup function and the network function) are set to ON and the function corresponding to the SoC 12c (the total recording function) is set to OFF, and a white color is used to indicate time slots during which all of the plurality of functions are set to OFF. It is also possible to use a yet different color to indicate time slots during which the function corresponding to the SoC 12c (the total recording function) is set to ON and the functions corresponding to the SoC 12b (the instantaneous startup function and the network function) are set to OFF.

By displaying the UI screen 50 including the usage frequency table 51 in this manner, users themselves are able to know at first glance in what time slots and at what frequency they are actually making effective use of the plurality of functions performed in the background. Accordingly, it is possible to make the most appropriate judgment as to whether such a plurality of functions should be set to an enabled state or a disabled state. Moreover, by displaying the UI screen 50 including the recommended mode selection section 52 as described above, users are able to know easily and reliably in what time slots the plurality of functions (or some of the plurality of functions) are set to an enabled state in each of the recommended modes while comparing the plurality of recommended modes having different power-saving effects. Accordingly, it is possible to easily select the optimum mode in terms of the balance between the power-saving effect and convenience by taking their own pattern of lifestyle into consideration.

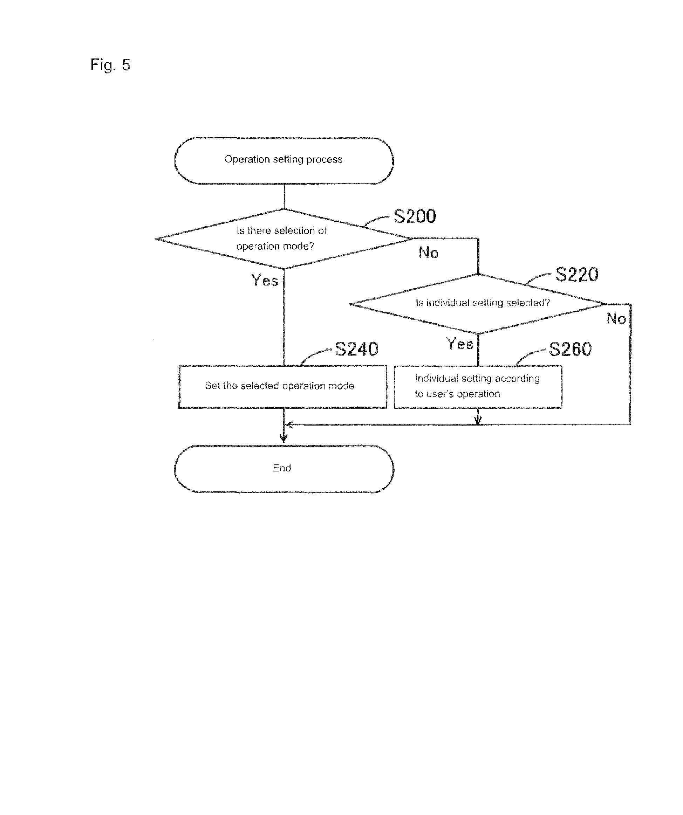

FIG. 5 illustrates a flowchart the operation setting process based on the UI screen 50.

The controller 12 determines whether or not the selection of the operation mode (recommended mode) is made via the selection boxes 52a and 52b. The user can select either the recommended mode 1 or 2 by operating the operating unit 13 or the remote controller 30 to select the selection box 52a or the selection box 52b. If a recommended mode is selected ("Yes" in Step S200), then in Step S240, the controller 12 sets the recommended mode selected in Step 200. To wit, in accordance with the daily schedule indicated by the selected recommended mode, each of the plurality of functions is thereafter set to an enabled state or disabled state. On the other hand, if there is no selection of a recommended mode ("No" in Step S200), then in Step S220, the controller 12 determines whether or not the individual setting is selected via the selection box 52c. If the individual setting is selected ("Yes" in Step S220), then in Step S260, the controller 12 displays a UI screen dedicated to prompt different inputs from the user and accepts the setting of whether or not each of the plurality of functions is set to an enabled state and the setting of restrictions on time slots during which each function is set to an enabled state. Then, in accordance with the accepted individual setting, each of the plurality of functions is thereafter set to an enabled state or a disabled state.

That is, as a result of the user performing a simple operation of selecting one of the recommended modes, the operation mode which makes convenience and power-saving effects appropriate can be set on the recording and reproduction device 10. Furthermore, the user can select the individual setting to make a finer setting catered more to his or her own liking than the setting by a recommended mode. If the individual setting is not selected in Step S220, i.e., if "Return" is selected via the selection box 52d, ("No" in Step S220), then the controller 12 ends this operation setting process.

The present invention is not limited to the preferred embodiments described above and can be implemented in a variety of modes within the scope that does not depart from the gist thereof, and for instance, the following modified examples are also possible.

The plurality of functions operating in the background in the recording and reproduction device 10 are not limited to the ones described above. Moreover, the threshold values to be compared with the usage frequencies of the plurality of functions do not have to be fixed values, and for example, it is also possible to change the values depending on the functions to be compared. In addition, in each of the UI screens 50, the usage frequency table 51 and the recommended mode selection section 52 are displayed on the same screen, but these may also be displayed on different screens.

Furthermore, it is also possible to include in a UI screen 50 numerical values indicating the power-saving effect in the case of selecting each of the recommended modes and to display this UI screen 50. For the numerical values indicating the power-saving effect, numerical values directly or indirectly indicating the power-saving effect may be used, and conceivable examples include the electricity cost or the like based on the amount of power consumption for one day in each of the recommended modes or the amount of power consumption for one month in each of the recommended modes. Moreover, it is also possible to display the amount of power consumption, the electricity cost, and the like that are saved in each of the recommended modes compared to the standard mode in which the plurality of functions performed in the background are always set to an enabled state (differences in the power consumption and the electricity cost when compared to the standard mode). Note that the electricity cost and the specification value (predicted value) of the power consumption per unit of time in an enabled state in each of the functions provided in the device are predetermined. Therefore, the controller 12 acquires or retains such information on the electricity cost and specification value in advance and calculates the numerical values indicating the power-saving effect for each of the recommended modes based on this acquired or retained information.

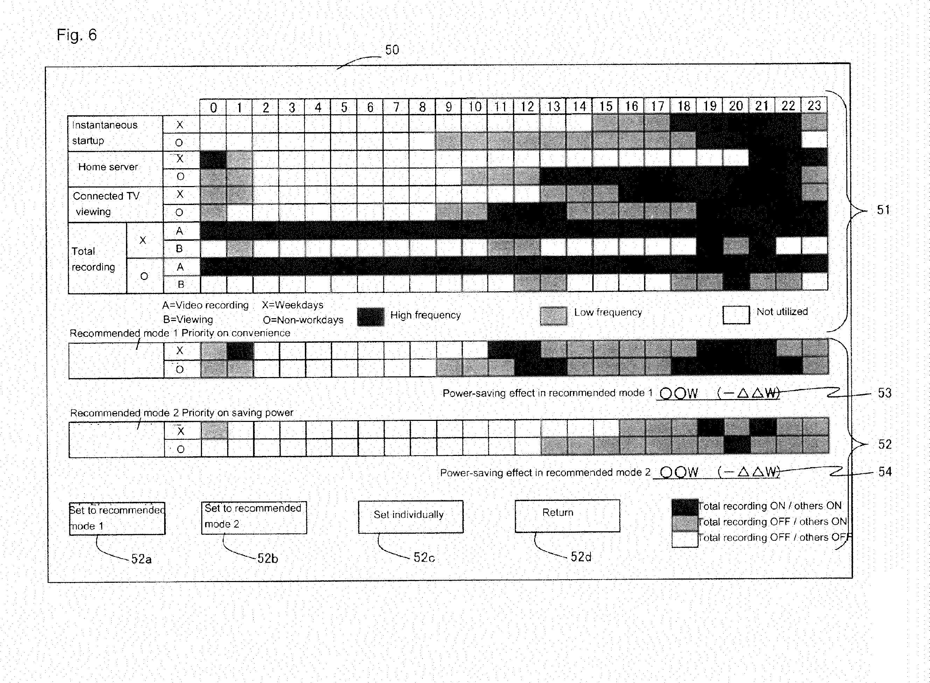

FIG. 6 constitutes one example of the UI screen 50 displayed in Step S160 and shows an example different from those of FIGS. 3 and 4. As is shown in FIG. 6, numerical value lines 53 and 54 which include the numerical values indicating the power-saving effects in the respective recommended modes 1 and 2 are displayed in the recommended mode selection section 52. The numerical value lines 53 and 54 show the power-saving effects that can be realized when the user selects the respectively corresponding recommended modes by concrete numerical values such as "OO W" and "-ΔΔ W." By displaying the UI screen 50 which includes the numerical value lines 53 and 54 in this manner, the user is possible to know clearly the extent of the power-saving effect produced by selecting each of the recommended modes. Accordingly, the user can easily select the optimum mode for himself or herself in terms of the balance between the power-saving effect and convenience.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A recording and reproduction device capable of recording and outputting content including video images and/or audio, the recording and reproduction device comprising:
a history acquisition unit that acquires usage histories by counting, for a specified period of time, data on whether or not a plurality of functions being performed in a background are in a specific usage state; and
a display controller programmed to display, on a display device, a user interface screen that is compiled based on the usage histories and that shows, by time slot, frequencies at which at least the plurality of functions are in the specific usage state.

2. The recording and reproduction device according to claim 1, wherein the display controller is programmed to generate a plurality of operation modes in which at least one of the plurality of functions is set to an enabled state in a time slot during which the frequency is at a specified level or higher, with the level being different for each of the plurality of operation modes, and to display the user interface screen after including selection boxes which make selection of one of the plurality of operation modes possible.

3. The recording and reproduction device according to claim 2, further comprising a plurality of integrated circuits each of which is used to control functions among the plurality of functions, and the display controller is programmed to generate the plurality of operation modes in which a correlation between the enabled state and the time slot is differentiated for each of the plurality of functions corresponding to a different one of the plurality of integrated circuits.

4. The recording and reproduction device according to claim 2, wherein the display controller includes, in the user interface screen, numerical values indicating a power-saving effect in a case of selecting each of the plurality of operation modes, and displays the interface screen.

5. The recording and reproduction device according to claim 1, wherein the plurality of functions include at least one function from among a specific recording function with which content pertaining to a plurality of television broadcast channels is continuously recorded, a startup time reduction function with which a time that the recording and reproduction device takes to transition from a standby state to an operating state is shortened compared to a standard transition time, and a network function with which communication with an external communication device is performed via a specified network.

6. The recording and reproduction device according to claim 5, wherein if the specific recording function is included in the plurality of functions, the history acquisition unit determines that the specific recording function is in the specific usage state in a time slot during which content to be reproduced following recording is recorded.

7. The recording and reproduction device according to claim 5, wherein if the startup time reduction function is included in the plurality of functions, the history acquisition unit determines that the startup time reduction function is in the specific usage state in a time slot during which the startup time reduction function is set to an enabled state and also the content is output.

8. The recording and reproduction device according to claim 5, wherein if the network function is included in the plurality of functions, the history acquisition unit determines that the network function is in the specific usage state in a time slot during which data pertaining to content to be viewed is received from the external communication device via the network and also the content based on the received data is output.
